# EUROPÄISCHE PATENTANMELDUNG

(11) **EP 1 529 995 A1**
(43) Veröffentlichungstag der Anmeldung: **11.05.2005**
(21) Anmeldenummer: 03405795.0
(22) Anmeldetag: 07.11.2003
(51) Int. Cl.: F16L 3/13, F16L 3/133, F16L 3/127

(54) **Rohrhalterungsvorrichtung**

(71) Anmelder: Wermuth Enterprises, 3400 Burgdorf (CH)
(72) Erfinder: Wermuth, Reto, 3400 Burgdorf (CH)
(74) Vertreter: Roshardt, Werner Alfred, Dipl.-Phys.

(57) **Zusammenfassung**

Eine Rohrhalterungsvorrichtung zum Befestigen eines Rohrs (30) an einer Fläche (50) umfasst einen Befestigungsteil (10), welcher an der Fläche (50) anbringbar ist, und einen Rohrhalteteil (20), welcher am Rohr (30) anbringbar ist, wobei der Rohrhalteteil (20) mit dem Befestigungsteil (10) durch einen Clip-Mechanismus (15, 21) verbindbar ist. Der Befestigungsteil (10) kann unabhängig vom Rohr (30) an der Fläche (50) angebracht werden, während der Rohrhalteteil (20) bereits vor der eigentlichen Montage am Rohr (30) angebracht werden kann. Durch den Clip-Mechanismus (15, 21) können die vormontierten Teile einfach und schnell miteinander verbunden werden. Gleichzeitig werden optisch unschöne hervorstehende Schraubenköpfe oder andere Befestigungselemente vermieden. Damit der Clip-Mechanismus (15, 21) der Rohrhalterungsvorrichtung wieder gelöst werden kann, kann ein Werkzeug mit einem Dorn durch eine seitliche Öffnung (12) in den Befestigungsteil (10) eingeführt werden.

## Beschreibung

### Technisches Gebiet

Die Erfindung betrifft eine Rohrhalterungsvorrichtung zum Befestigen eines Rohrs an einer Fläche, ein Werkzeug zum Lösen einer Rohrhalterungsvorrichtung und ein Verfahren zum Befestigen eines Rohrs an einer Fläche.

### Stand der Technik

Herkömmlich wurden Rohre besonders in Wohn- und Geschäftsräumen meistens so verlegt, dass sie nach Abschluss der Arbeiten nicht mehr sichtbar waren. Sie wurden üblicherweise hinter einer Abdeckplatte, einer vorgelagerten Wand oder einer abgehängten Decke versteckt. Dies führte einerseits zu einem gewissen Raumverlust und war andererseits aufwändig, besonders bei Renovationen und Umbauten. Heute werden vermehrt frei verlegte Rohre verwendet, auch bewusst, als architektonisches Stilelement.

Zur Befestigung der Rohre an einer Fläche, z. B. der Wand oder der Decke, sind zwar eine Vielzahl von Befestigungsvorrichtungen bekannt.

Diese bekannten Vorrichtungen, wie Rohrschellen oder -briden, sind aber eigentlich ausgelegt für die Befestigung von Rohren in Industrieräumen oder von Rohren, die nach Abschluss der Bauarbeiten versteckt angeordnet sind. Sie entsprechen einerseits optisch nicht den Anforderungen für das freie Verlegen von Rohren in Wohn- oder Geschäftsräumen und weisen andererseits oft hervorstehende Teile auf, welche eine Verletzungsgefahr bilden und an welchen sich Staub ablagert. Die Montage bekannter Vorrichtungen ist zudem oft aufwändig.

### Darstellung der Erfindung

Aufgabe der Erfindung ist es, eine dem eingangs genannten technischen Gebiet zugehörende Rohrhalterungsvorrichtung zu schaffen, welche schnell und einfach montierbar ist und optisch sowie strukturell für das sichtbare Verlegen von Rohren in Wohn- und Geschäftsräumen geeignet ist.

Die Lösung der Aufgabe ist durch die Merkmale des Anspruchs 1 definiert. Gemäss der Erfindung umfasst die Rohrhalterungsvorrichtung
a) einen Befestigungsteil, welcher an der Fläche anbringbar ist; und
b) einen Rohrhalteteil, welcher zum Halten des Rohrs ausgebildet ist;
   wobei
c) der Rohrhalteteil mit dem Befestigungsteil durch einen Clip-Mechanismus verbindbar ist.

Erst kann der Befestigungsteil unabhängig vom Rohr an der Fläche angebracht werden, worauf der Rohrhalteteil zusammen mit dem Rohr am Befestigungsteil angebracht wird. Durch den Clip-Mechanismus können die vormontierten Teile einfach und schnell miteinander verbunden werden. Gleichzeitig werden potentiell gefährliche und optisch unschöne hervorstehende Schraubenköpfe oder andere Befestigungselemente vermieden.

Es ist vorteilhaft, wenn der Clip-Mechanismus wieder lösbar ist, so dass der Rohrhalteteil bei Bedarf auf einfache Weise wieder vom Befestigungsteil getrennt werden kann.

Mit Vorteil ist der Clip-Mechanismus durch mindestens eine federnde Lasche am Rohrhalteteil und mindestens einen entsprechenden Anschlag am Befestigungsteil gebildet. Diese Anordnung erlaubt eine besonders einfache Ausbildung des Rohrhalteteils und des Befestigungsteils. Besonders vorteilhaft ist die symmetrische Anordnung jeweils zweier Laschen und entsprechend zweier Anschläge. So können die auftretenden Kräfte gleichmässig verteilt werden.

Es kann vorteilhaft sein, zwei federnde Laschen hintereinander oder eine federnde Lasche mit zwei Einrastbereichen vorzusehen, so dass das zu befestigende Rohr nach Einrasten des durch die erste Lasche und den Anschlag gebildeten ersten Clip-Mechanismus noch in die gewünschte Position gerichtet werden kann. Ist dies erfolgt, kann die zweite Lasche mit dem Anschlag in Eingriff gebracht werden, so dass das Rohr durch den zweiten Clip-Mechanismus fest an der Rohrhalterungsvorrichtung fixiert wird.

Alternativ kann eine federnde Lasche am Befestigungsteil mit einem Anschlag am Rohrhalteteil zusammenwirken. Anstelle einer federnden Lasche können andere federnde Elemente vorgesehen sein, wie z. B. eine Mehrzahl federnd gelagerter, durch eine Kontaktfläche zwischen dem Rohrhalteteil und dem Befestigungsteil hindurchtretender Kugeln, welche mit entsprechenden Ausnehmungen an der Gegenfläche zusammenwirken.

Bevorzugt sind die federnde Lasche und der Anschlag derart ausgebildet, dass bei eingerastetem Clip-Mechanismus ein den Anschlag einschliessender Winkel zwischen einem Kontaktbereich der federnden Lasche mit dem Anschlag und einer Trennrichtung gleich ist oder kleiner als 90 °. Diese Formgebung stellt sicher, dass der Rohrhalteteil nicht ohne Weiteres (z. B. ohne Werkzeug) wieder vom Befestigungsteil getrennt werden kann. Die Kraft, welche beim Versuch, den Rohrhalteteil in Trennrichtung aus dem Befestigungsteil zu ziehen, vom Anschlag auf den Kontaktbereich der federnden Lasche ausgeübt wird, bewirkt nämlich nicht, dass die federnde Lasche nachgibt und so ein Herausziehen ermöglicht wird. Diese Wirkung wird auch dann erreicht, wenn die federnde Lasche am Befestigungsteil und der Anschlag am Rohrhalteteil angeordnet sind.

Vorzugsweise ist der Befestigungsteil röhrenförmig und mittels eines vollständig in einem Innenraum des Befestigungsteils aufgenommenen Befestigungsmittels, insbesondere einer Schraube, so an der Fläche befestigbar, dass eine Hauptachse des Befestigungsteils senkrecht zur Fläche orientiert ist. Der Querschnitt und die Querschnittsform des Befestigungsteils können je nach gewünschtem optischen Eindruck gewählt werden, die Form z. B. rund oder rechteckig. Dadurch, dass das Befestigungsmittel vollständig im Befestigungsteil aufgenommen ist, tritt es nach aussen nicht in Erscheinung. Dies bietet einen ästhetischen Vorteil. Ein Befestigungsteil mit senkrecht zur Wand orientierter Hauptachse, welches neben der Befestigung auch als Distanzstück dienen kann, wirkt zudem optisch schlank und unauffällig. Anstelle einer Schraube kann das Befestigungsmittel auch beispielsweise ein Anker oder ein Nagel sein.

Alternativ kann der Befestigungsteil z. B. würfelförmig sein, wobei die Wand bzw. das Rohr auf gegenüberliegenden Würfelseiten anschliessen. Das Befestigungsmittel kann auch auf andere Weise optisch versteckt oder dem Zugriff von aussen entzogen werden, z. B. indem ein Schraubenkopf versenkt oder mittels einer Abdeckung abgedeckt wird. Die Hauptachse eines rohrförmigen Befestigungsteils kann zudem aus statischen oder optischen Gründen auch geneigt zur Fläche angeordnet werden.

Bevorzugt weist der Innenraum des Befestigungsteils einen Anschlag für einen Schraubenkopf auf. Durch eine Schraube kann der Befestigungsteil einfach und kostengünstig an praktisch allen Flächen angebracht werden, entsprechende Schrauben und gegebenenfalls Dübel sind allgemein verfügbar. Die Schraube kann durch den röhrenförmigen Befestigungsteil eingeführt und in die Fläche bzw. den Dübel eingeschraubt werden, bis der Schraubenkopf am Anschlag anliegt. So wird der rohrförmige Befestigungsteil in Richtung seiner Hauptachse gegen die Wand gedrückt und an seinem hinteren Ende stabil abgestützt. Die Schraube ist vollständig im Befestigungsteil bzw. in der Fläche verborgen, deren Kopf ist aber durch den rohrförmigen Befestigungsteil zugänglich und kann problemlos wieder gelöst werden. Der hinter dem Anschlag liegende Bereich des Befestigungsteils kann nach Wunsch gekürzt werden, so dass der Abstand des von der Vorrichtung gehaltenen Rohrs angepasst werden kann.

Alternativ kann für eine Schraube ein Anschlag vorgesehen werden, welcher nicht direkt mit dem Schraubenkopf zusammenwirkt, sondern mit einem Zwischenstück, z. B. einer Unterlagsscheibe. Dies erlaubt die Verwendung von Schrauben mit unterschiedlichem Durchmesser und mit unterschiedlich grossem Schraubenkopf.

Mit Vorteil ist der Rohrhalteteil im Wesentlichen durch eine Schelle gebildet, welche das Rohr umschliessend aufnehmen kann. Diese Lösung ist optisch unauffällig, weist keine hervorstehenden Teile auf und ist kostengünstig.

Alternativ kann eine Rohrhalterung vorgesehen werden, welche das Rohr nur teilweise umschliesst, oder eine mehrstückige Halterung, welche beispielsweise an verschiedene Rohrdurchmesser anpassbar ist.

Bevorzugt ist die federnde Lasche mit der Schelle einstückig ausgebildet. Dadurch wird der Fertigungsaufwand reduziert und Verbindungsstellen, welche optisch oft unschön und potentielle Schwachstellen sind, entfallen. Es ist zudem oft wünschenswert, dass der Schellenteil ebenfalls aus einem elastischen Material ausgebildet ist, so dass eine gewisse Anpassung an den Aussendurchmesser des Rohrs möglich ist.

Alternativ kann eine federnde Lasche z. B. an einem nicht elastischen Schellenteil angeordnet werden.

Vorzugsweise ist die Schelle quer zu einer Hauptachse des Rohrs über das Rohr schiebbar. Dadurch lässt sich die Schelle über ein bereits montiertes oder ein gebogenes Rohr schieben, dessen Enden nicht mehr frei zugänglich sind. Dies vereinfacht die Montage des Rohrs bei Verwendung der erfindungsgemässen Rohrbefestigungsvorrichtung. Damit die Schelle zum Schieben entsprechend verformt werden kann, besteht sie z. B. aus elastischem Material oder weist ein Scharnier auf.

Alternativ ist die Schelle fest an den Aussendurchmesser des Rohrs angepasst und wird vor der Montage vom Rohrende her auf das Rohr aufgeschoben. In diesem Fall ist es von Vorteil, wenn der Rohrhalteteil und/oder der Befestigungsteil Mittel aufweisen, durch welche das Rohr beim Einrasten des Clip-Mechanismus gleichzeitig axial in der Schelle festgehalten wird, z. B. ein Anschlag im Befestigungsteil, welcher von einer Feder nach aussen gegen das Rohr gedrückt wird.

Mit Vorteil ist ein von aussen sichtbarer Teil des Befestigungsteils und/oder des Rohrhalteteils aus, insbesondere oberflächenbehandeltem, Stahlblech gefertigt. Dieses Material ist optisch ansprechend und erfüllt alle mechanischen Anforderungen. Stahlblech erlaubt überdies die einstückige Fertigung des Rohrhalteteils, weil sich Stahlblech einer gewissen Dicke besonders zur Herstellung der federnden Lasche eignet und so auch der Schelle eine gewisse Elastizität zur Anpassung an den Aussendurchmesser des Rohrs bzw. zum Schieben der Schelle über das Rohr verleiht. Durch die Behandlung der Oberfläche lässt sich eine gewünschte, z. B. einer Inneneinrichtung angepasste, Farbe und Textur des Materials erreichen. Bevorzugt sind sämtliche von aussen sichtbare Teile der Rohrhalterungsvorrichtung aus demselben Material gefertigt.

Alternativ sind auch andere Materialien zur Fertigung der Vorrichtung geeignet, z. B. Messing, Kupfer, mehrlagige Bleche, Kunststoffe oder Aluminium für den Rohrhalteteil.

Bevorzugt weist der Rohrhalteteil an einer Kontaktfläche mit dem Rohr eine Einlage aus Gummi, insbesondere Lochgummi, auf. Die Gummieinlage verstärkt die Haftreibung zwischen der Schelle und dem Rohr, wodurch bei einem vertikal befestigten Rohr ein Teil des Rohrgewichts durch die Rohrhalterung auf die Fläche abgeleitet wird. Gleichzeitig wird die Elastizität der Schelle vergrössert, so dass grössere Toleranzen im Rohraussendurchmesser möglich sind. Die Gummieinlage dient ausserdem zur Schall- und Vibrationsdämmung. Lochgummi, d. h. eine Gummieinlage mit durchgehenden Löchern oder Regionen geringeren Querschnitts, zeigt die genannten Eigenschaften in noch höherem Masse. Wenn die Einlage aus Lochgummi entlang einer Linie geschnitten wird, welche ausschliesslich ausserhalb der Löcher oder Regionen geringeren Querschnitts verläuft, ist trotzdem die Herstellung einer Einlage möglich, welche überall einen geschlossenen Rand aufweist. Eine derartige Einlage führt zu einer verbesserten Optik. Spalte, in denen sich Staub und Schmutz ablagern kann sind überdies von aussen keine zugänglich.

Alternativ kann, besonders bei bestimmten Materialien der Schelle, auf eine Einlage verzichtet werden. Die Einlage kann ausserdem aus anderen Materialien, z. B. Kunststoffen oder Schaumstoff gefertigt werden.

Mit Vorteil ist die Einlage an einem oberen und/oder unteren Ende durch eine im Wesentlichen ringförmige, an einen Aussendurchmesser des Rohrs angepassten Abdeckung abgeschlossen, wobei die Abdeckung insbesondere geschlitzt ist, um eine Verformung des Rohrhalteteils zu erlauben. Die Abdeckung ist mit Vorteil aus demselben Material wie die Schelle gefertigt. Dadurch ergibt sich ein einheitliches, unauffälliges Erscheinungsbild. Durch die Abdeckung wird das Eindringen von Staub oder Schmutz verhindert. Der Schlitz oder eine Mehrzahl von Schlitzen erlaubt die Verformung des Rohrhalteteils, z. B. beim Aufschieben über ein Rohr.

Bevorzugt weist der Befestigungsteil mindestens eine seitliche Öffnung zum Einführen eines Werkzeugs zum Lösen des Clip-Mechanismus auf. Durch das Werkzeug kann das federnde Element des Clip-Mechanismus soweit zurückgebogen werden, dass sich der Rohrhalteteil leicht wieder aus dem Befestigungsteil zurückziehen lässt, so dass der Halteteil vollständig vom Befestigungsteil getrennt wird. Weist das Werkzeug zum Einführen eine dornartige Spitze auf, kann die Öffnung klein und somit optisch unauffällig gestaltet werden.

Alternativ können Mittel zum Lösen des Clip-Mechanismus direkt an der Rohrhalterungsvorrichtung vorgesehen werden oder zum Trennen muss eine bestimmte Rückzugskraft überwunden werden.

Ein Werkzeug zum Lösen des Clip-Mechanismus einer Rohrhalterungsvorrichtung umfasst einen Dorn, welcher zum Lösen des Clip-Mechanismus in die Öffnung des Befestigungsteils einführbar ist.

Ein Verfahren zum Befestigen eines Rohres an einer Fläche umfasst folgende Schritte:
a) Anbringen eines Befestigungsteils (10) an der Fläche (50);
b) Umschliessen des Rohrs (30) durch einen Rohrhalteteil (20);
c) Verbinden des das Rohr (30) umschliessenden Rohrhalteteils (20) mit dem an der Fläche (50) angebrachten Befestigungsteil (10) durch einen Clip-Mechanismus (15, 21).

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Schrägansicht der erfindungsgemässen Rohrhalterungsvorrichtung;
- Fig. 2: eine Schrägansicht der Rohrhalterungsvorrichtung mit einem gehaltenen Rohr;
- Fig. 3A: einen horizontalen Querschnitt entlang der Längsachse des Befestigungsteils der erfindungsgemässen Rohrhalterungsvorrichtung;
- Fig. 3B: einen vertikalen Querschnitt entlang der Längsachse des Befestigungsteils;
- Fig. 4: einen horizontalen Querschnitt des Rohrhalteteils der erfindungsgemässen Rohrhalterungsvorrichtung;
- Fig. 5: einen horizontalen Querschnitt der zusammengesetzten Rohrhalterungsvorrichtung.

Grundsätzlich sind in den Figuren gleiche Teile mit gleichen Bezugszeichen versehen.

### Wege zur Ausführung der Erfindung

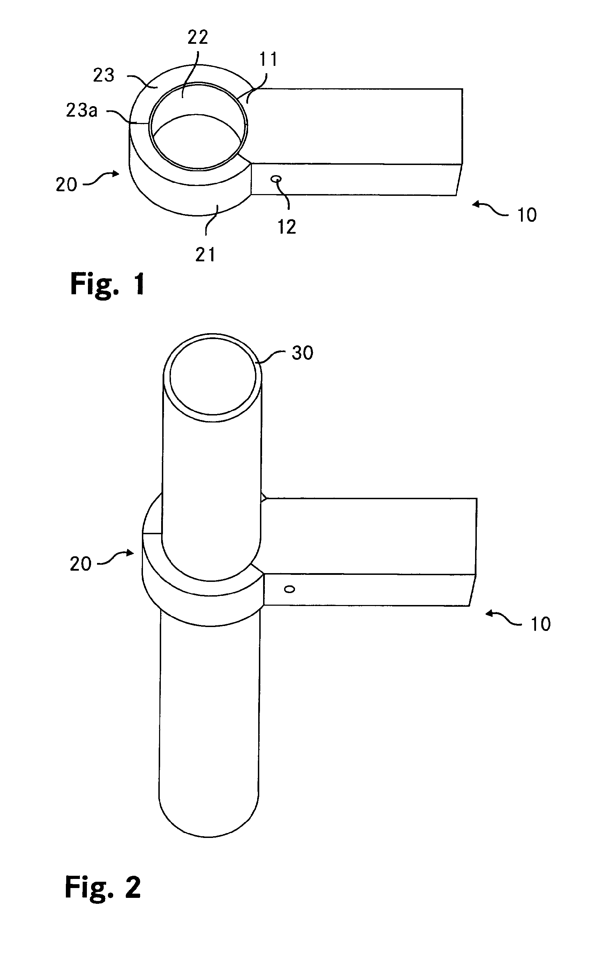

Die Figur 1 zeigt eine Schrägansicht einer erfindungsgemässen Rohrhalterungsvorrichtung. Die Rohrhalterungsvorrichtung ist zusammengesetzt aus dem Befestigungsteil 10 und dem Rohrhalteteil 20. Der Befestigungsteil 10 wird durch ein Profilrohr aus Stahlblech mit rechteckigem Querschnitt gebildet. An seinem vorderen Ende weist der Befestigungsteil 10 einen Anschlussbereich 11 auf, dessen Kontur dem Umfang eines aufzunehmenden Rohrs angepasst ist. Die Kanten des Befestigungsteils 10 sind abgerundet. Seitlich, nahe des Anschlussbereichs 11 weist der Befestigungsteil 10 beidseitig je eine kleine kreisförmige Öffnung 12 auf, in welche ein Werkzeug zum Trennen des Rohrhalteteils 20 vom Befestigungsteil 10 eingeführt werden kann.

Der Rohrhalteteil 20 ist im Wesentlichen ringförmig. Er umfasst eine Schelle 21 aus Stahlblech, welche den äusseren Mantel des Rohrhalteteils 20 bildet. Innerhalb der Schelle 21 ist eine im Wesentlichen ringförmige Einlage 22 aus Lochgummi gehalten. Die Schelle 21 und die Einlage 22 sind auf ihrer oberen und ihrer unteren Seite je durch eine ringförmige Abdeckung 23 abgedeckt. Die Abdeckung 23 umfasst am äusseren Ende des Rohrhalteteils 20 einen radialen Schlitz 23a. Dadurch wird eine Deformation des Rohrhalteteils 20 ermöglicht, welche erlaubt, dass der Rohrhalteteil 20 vor dem Anbringen an den Befestigungsteil 10 quer zur Rohr-Längsachse über ein Rohr geschoben werden kann. Bei dieser Deformation werden die Schelle 21 und die Einlage 22 elastisch verformt, während der Schlitz 23a in der Abdeckung 23 gleichsam als Scharnier wirkt, so dass die Schenkel der Abdeckung 23 beidseitig weggeklappt werden können.

Die Figur 2 zeigt eine Schrägansicht der Rohrhalterungsvorrichtung mit einem darin gehaltenen Rohr. Das Rohr 30 ist innerhalb des Rohrhalteteils 20 gehalten und steht senkrecht zur Hauptfläche des Befestigungsteils 10. Die Kontaktfläche des Rohrs 30 mit dem Rohrhalteteil 20 wird durch die Innenseite der Einlage 22 aus Gummi gebildet und weist eine hohe Haftreibungszahl auf. Das Rohr 30 ist also auch bei vertikaler Befestigung in der Rohrhalterungsvorrichtung gehalten und kann nicht rutschen. Der Befestigungsteil 10 kann an einer Wand oder einer anderen Fläche, z. B. einer Decke, befestigt werden.

Die Rohrhalterungsvorrichtung wirkt optisch geschlossen, es sind keinerlei Befestigungselemente offen sichtbar oder zugänglich.

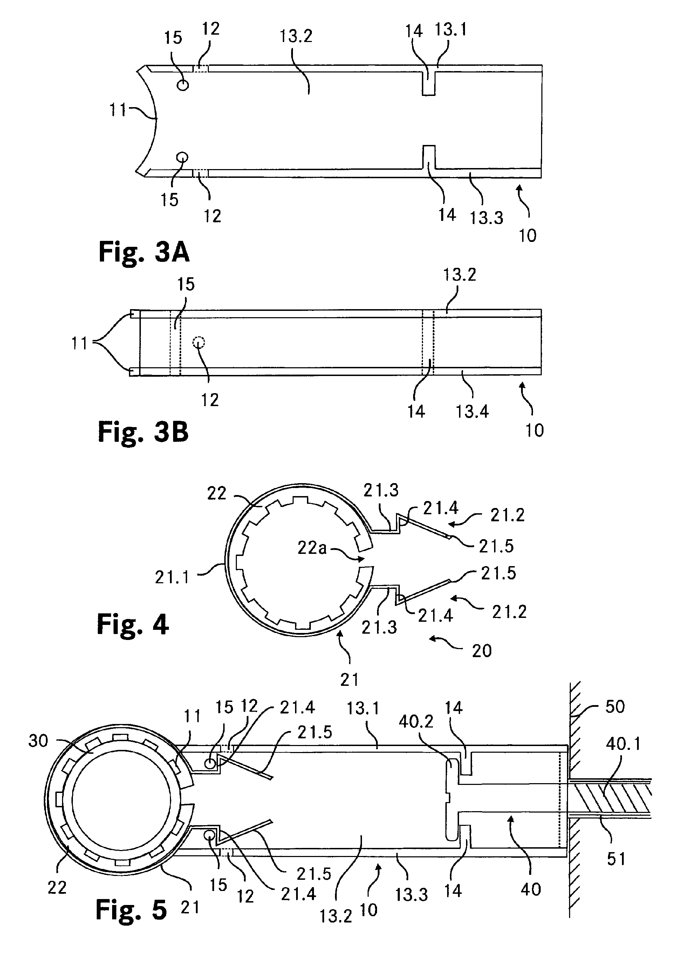

Die Figuren 3A und 3B zeigen einen horizontalen bzw. vertikalen Querschnitt entlang der Längsachse des Befestigungsteils der erfindungsgemässen Rohrhalterungsvorrichtung. Der Befestigungsteil 10 ist im Wesentlichen aus vier Wandteilen 13.1, 13.2, 13.3, 13.4 zusammengesetzt, welche jeweils rechtwinklig aneinander anschliessen, so dass sich senkrecht zur Längsachse des Befestigungsteils 10 ein rechteckiger Querschnitt ergibt. Der obere und untere Wandteil 13.2, 13.4 weisen im Anschlussbereich 11 des Befestigungsteils 10 eine konkave Einbuchtung auf, welche an den Aussendurchmesser des Rohrs angepasst ist. Die kreisförmigen Öffnungen 12 befinden sich in den seitlichen Wandteilen 13.1, 13.3 jeweils auf gleicher Höhe und gleich weit vom Anschlussbereich 11 entfernt. Die seitlichen Wandteile 13.1, 13.3 weisen zudem weiter entfernt vom Anschlussbereich 11 senkrecht nach innen ragende Flansche 14 auf, welche als Auflage für einen Schraubenkopf einer Schraube dienen können, mit welcher der Befestigungsteil 10 an einer Wand befestigt werden kann.

Weiter sind zwischen dem oberen und unteren Wandteil 13.2, 13.4 senkrecht zwei Stifte 15 gehalten, welche nahe der seitlichen Wandteile 13.1 ,13.3, zwischen den Öffnungen 12 in den seitlichen Wandteilen 13.2, 13.4 und dem Anschlussbereich 11 angeordnet sind. Der obere und untere Wandteil 13.2, 13.4 ragen beim Anschlussbereich 11 über die seitlichen Wandteile 13.1, 13.3 hinaus, so dass sie eine Abdeckung für einen Teil des Rohrhalteteils 20 bilden.

Die Figur 4 zeigt einen horizontalen Querschnitt des Rohrhalteteils der erfindungsgemässen Rohrhalterungsvorrichtung. Der Rohrhalteteil 20 wird durch die Schelle 21 und die darin aufgenommene Einlage 22 aus Gummi gebildet. Die Schelle 21 weist einen Haltebereich 21.1 zur Aufnahme des Rohrs sowie federnde Laschen 21.2 auf, welche unmittelbar an den Haltebereich 21.1 anschliessen und einstückig damit aus Stahlblech gefertigt sind. Der Haltebereich 21.1 wird durch einen Blechstreifen gebildet, welcher senkrecht zu seiner Hauptfläche in die Form eines Kreisbogens mit einem Winkel von ca. 315 ° gebogen ist. Die federnden Laschen 21.2 sind beide gleichartig ausgebildet und weisen jeweils drei im Wesentlichen gerade Abschnitte auf, welche unmittelbar aneinander anschliessen: einen vorderen Teil 21.3, einen Stufenteil 21.4 und einen Betätigungsteil 21.5. Im Haltebereich 21.1 entspricht die Breite des Blechstreifens der Höhe des Befestigungsteils 10. Im Bereich der federnden Laschen 21.2 ist die Breite etwas geringer, damit die Laschen 21.2 beim Anschlussbereich 11 in den Befestigungsteil 10 eingeführt werden können. Die vorderen Teile 21.3 schliessen unmittelbar an die Enden des Haltebereichs 21.1 an und weisen symmetrisch und parallel zueinander vom Haltebereich 21.1 weg. Die Stufenteile 21.4 schliessen jeweils rechtwinklig an die vorderen Teile 21.3 an und weisen nach aussen. Die Betätigungsteile 21.5 wiederum schliessen mit den Stufenteilen 21.4 einen Winkel von ca. 60 ° ein und weisen schräg nach innen.

Die Einlage 22 aus Lochgummi hat die Form eines Kreisringabschnitts und weist an ihrem hinteren Ende einen Spalt 22a auf, so dass ein Zusammendrücken des Rohrhalteteils 20 nicht durch die Einlage 22 behindert wird. Im Querschnitt weist die Einlage 22 beabstandete, nicht durchgehende Ausnehmungen ("Löcher") auf. Der Aussendurchmesser der Einlage 22 aus Gummi ist dem Innendurchmesser der Schelle 21 angepasst, der Innendurchmesser entspricht dem Aussendurchmesser des aufzunehmenden Rohrs. Durch Austauschen der Einlage 22 lässt sich der Rohrhalteteil 20 in gewissen Grenzen verschiedenen Rohraussendurchmessern anpassen.

Die Figur 5 zeigt einen horizontalen Querschnitt der zusammengesetzten Rohrhalterungsvorrichtung. Die Montage der erfindungsgemässen Rohrhalterungsvorrichtung verläuft wie folgt. Als Erstes wird der Befestigungsteil 10 an der Wand 50 (oder einer anderen Fläche, wie z. B. einer Decke) befestigt. Dazu wird eine Schraube 40 von vorne in den Befestigungsteil 10 eingeführt. Durch den Zwischenraum zwischen den Flanschen 14 kann der Gewindeteil 40.1 der Schraube 40 nach hinten aus dem Befestigungsteil 10 hinaus geführt werden, während der Kopf 40.2 der Schraube 40 an den seitlichen Flanschen 14 anschlägt. Zur Veränderung des Abstands des Rohrs 30 von der Wand 50 kann der hintere Teil des Befestigungsteils 10, d. h. der hinter den Flanschen 14 liegende Bereich, gekürzt werden. Der Befestigungsteil 10 wird also z. B. mit einer Länge geliefert, welche dem maximal üblichen Rohrabstand entspricht. Ein geringerer Rohrabstand lässt sich durch Kürzen des Befestigungsteils auf einfache Weise erreichen. Dadurch, dass für verschiedene Rohrabstände nur ein Typ des Befestigungsteils 10 vorrätig sein muss, können die Lagerhaltungskosten gesenkt werden.

Die in den Befestigungsteil 10 eingeführte Schraube 40 wird nun mit einem üblichen Schraubendreher im Dübel 51, welcher an der gewünschten Befestigungsstelle in der Wand 50 angebracht worden ist, verschraubt. Sobald der Kopf 40.2 der Schraube 40 an den Flanschen 14 anliegt, ergibt sich eine Spannwirkung, welche gewährleistet, dass der Befestigungsteil 10 sicher an der Wand gehalten ist. Die hinteren Enden der Wandteile 13 des Befestigungsteils 10 sind an der Wand 50 abgestützt, so dass die Längsachse des Befestigungsteils 10 senkrecht zur Wand 50 orientiert ist. Zu diesem Zeitpunkt lässt sich der Befestigungsteil 10 lediglich noch um seine Längsachse drehen. Diese Verdrehbarkeit erleichtert das nachfolgende Anbringen des Rohrhalteteils 20.

Als nächstes wird nun das Rohr 30 so vor dem Befestigungsteil 10 positioniert, wie es schliesslich durch die Rohrhalterungsvorrichtung gehalten werden soll. Abhängig vom Aussendurchmesser des Rohrs 30 wird ein Rohrhalteteil 20 mit einem entsprechenden Innendurchmesser gewählt. Verschiedene Rohrhalteteile mit unterschiedlichen Innendurchmessern lassen sich problemlos an demselben Befestigungsteil 10 anbringen. Der ausgewählte Rohrhalteteil 20 wird durch elastisches Aufbiegen der Schelle 21 und der Einlage 22 temporär erweitert, so dass er quer zur Rohrlängsachse über das Rohr 30 geschoben werden kann. Sobald dies geschehen ist, kann der Betätigungsteil 21.5 des Rohrhalteteils 20 in den Befestigungsteil 10 eingeschoben werden.

Durch die senkrechten Stifte 15 werden die Betätigungsteile 21.5 beim Einschieben des Rohrhalteteils 20 elastisch nach innen gebogen. Dies geschieht aufgrund der schräg nach innen weisenden Anordnung der Betätigungsteile 21.5 allmählich und erfordert keinen grossen Kraftaufwand. Das Einschieben wird solange fortgesetzt, bis die Stufenteile 21.4 die Stifte 15 passiert haben. In diesem Moment federn die nun nicht mehr an den Stiften 15 anliegenden Betätigungsteile 21.5 wieder nach aussen. Gleichzeitig stösst die Schelle 22 am Anschlussbereich 11 des Befestigungsteils 10 an. Der Rohrhalteteil 20 ist nun gleichzeitig durch die Stufenteile 21.4 hinter den Stiften 15 und durch die Schelle 22 am Anschlussbereich 11 gehalten und ist somit unbeweglich am Befestigungsteil 10 und dadurch auch an der Wand angebracht. Ein Zurückziehen des Rohrhalteteils 20 aus dem Befestigungsteil 10 ist nicht ohne Weiteres möglich, weil die federnden Laschen 21.2 aufgrund der senkrecht nach aussen weisenden Stufenteile 21.4 so hinter den Stiften 15 gehalten sind, dass ein Zurückziehen nicht dazu führt, dass die Laschen 21.2 nach innen gebogen werden.

Der Rohrhalteteil 20 kann aber leicht vom Befestigungsteil 10 gelöst werden, indem in die seitlichen Öffnungen 12 jeweils ein gerader, dünner Dorn eingeführt wird. Durch diesen können die Betätigungsteile 21.5 nach innen gedrückt werden, so dass ein Herausziehen des Rohrhalteteils 20 ermöglicht wird, sobald die Stufenteile 21.4 nicht mehr hinter den Stiften 15 gehalten sind. Üblicherweise ist ein Zurückziehen des Rohrhalteteils 20 nicht einmal erforderlich, weil durch weiteres Eindrücken der Dorne gegen die nach hinten zulaufenden Betätigungsteile 21.5 und durch die Elastizität der Betätigungsteile 21.5 selbst der Rohrhalteteil 20 automatisch aus dem Befestigungsteil 10 heraus gestossen wird.

Das Werkzeug zum Lösen des Rohrhalteteils 20 ist zweckmässigerweise zangenartig aufgebaut, so dass zwei Dorne gleichzeitig in beide seitlichen Öffnungen 12 eingeführt werden können.

Bei einer weichen Wandoberfläche kann eine Unterlegeplatte zwischen dem Befestigungsteil 13 und der Wand 50 angeordnet werden mit einem Loch, durch welches die Schraube 40 hindurchtreten kann. Die Grösse der Unterlegeplatte entspricht zumindest dem Querschnitt des Befestigungsteils 13, so dass der Befestigungsteil 13 durch die Unterlegeplatte auf der Wand abgestützt ist. So wird verhindert, dass die Wandteile 13.1...13.4 aufgrund ihres geringen Querschnitts in die weiche Wandoberfläche eindringen.

Der Clip-Mechanismus zwischen dem Befestigungsteil und dem Rohrhalteteil kann auch andersartig ausgeführt werden, insbesondere mit nur einer federnden Lasche und einem entsprechenden Anschlag oder mit mehr als zwei Laschen und Anschlägen. Die Form der Lasche und der Anschläge kann ebenfalls variiert werden. Beispielsweise kann anstelle eines Betätigungsteils ein Anschlag vorgesehen werden, welcher sich konisch erweitert und so den Stufenteil sukzessive elastisch nach innen biegt. Das Lösen des Rohrhalteteils kann in diesem Fall und auch in anderen Fällen dadurch erfolgen, dass der Anschlag beweglich ausgeführt ist und z. B. nach aussen zurückgezogen werden kann.

Soll die Verwendbarkeit unterschiedlicher Rohrhalteteile an demselben Befestigungsteil noch verbessert werden, kann der Anschlussbereich des Befestigungsteils gerade verlaufen, wobei der Rohrhalteteil ein Kontaktelement aufweist, welches auf seiner Innenseite - entsprechend dem Rohraussendurchmesser - eine konkave Form aufweist und auf seiner Aussenseite eine gerade Fläche zum Kontaktieren des Anschlussbereichs am Befestigungsteil.

Der Rohrhalteteil kann so ausgebildet sein, dass gleichzeitig mehrere parallel angeordnete Rohre gehalten werden können, z. B. ein Kaltwasser- und ein Warmwasserrohr. Dazu umfasst er mit Vorteil mehrere Schellen, welche symmetrisch an einem gemeinsamen Verbindungsteil gehalten sind.

Schliesslich ist die erfindungsgemässe Konstruktion mit einer Vielzahl von Varianten vereinbar, bei welchen die Form und die Optik der Rohrhalterungsvorrichtung gestalterischen Ideen angepasst sind.

Zusammenfassend ist festzustellen, dass durch die Erfindung eine Rohrhalterungsvorrichtung geschaffen wird, welche schnell und einfach montierbar ist und optisch sowie strukturell für das sichtbare Verlegen von Rohren in Wohn- und Geschäftsräumen geeignet ist.

## Patentansprüche

1. Rohrhalterungsvorrichtung zum Befestigen eines Rohrs (30) an einer Fläche (50) mit
a) einem Befestigungsteil (10), welcher an der Fläche (50) anbringbar ist; und
b) einem Rohrhalteteil (20), welcher zum Halten des Rohrs (30) ausgebildet ist;
wobei
c) der Rohrhalteteil (20) mit dem Befestigungsteil (10) durch einen Clip-Mechanismus (15, 21) verbindbar ist.

2. Rohrhalterungsvorrichtung nach Anspruch 1, **dadurch gekennzeichnet, dass** der Clip-Mechanismus (15, 21) durch mindestens eine federnde Lasche (21.2) am Rohrhalteteil (20) und mindestens einen entsprechenden Anschlag (15) am Befestigungsteil (10) gebildet ist.

3. Rohrhalterungsvorrichtung nach Anspruch 2, **dadurch gekennzeichnet, dass** die federnde Lasche (21.2) und der Anschlag (15) derart ausgebildet sind, dass bei eingerastetem Clip-Mechanismus (15, 21) ein den Anschlag (15) einschliessender Winkel zwischen einem Kontaktbereich der federnden Lasche (21.2) mit dem Anschlag (15) und einer Trennrichtung gleich ist oder kleiner als 90 °.

4. Rohrhalterungsvorrichtung nach einem der Ansprüche 1 bis 3, **dadurch gekennzeichnet, dass** der Befestigungsteil (10) röhrenförmig ist und mittels eines vollständig in einem Innenraum des Befestigungsteils (10) aufgenommenen Befestigungsmittels, insbesondere einer Schraube (40), so an der Fläche (50) befestigbar ist, dass eine Hauptachse des Befestigungsteils (10) senkrecht zur Fläche (50) orientiert ist.

5. Rohrhalterungsvorrichtung nach Anspruch 4, **dadurch gekennzeichnet, dass** der Innenraum des Befestigungsteils (10) einen Anschlag (14) für einen Schraubenkopf (40.2) aufweist.

6. Rohrhalterungsvorrichtung nach einem der Ansprüche 1 bis 5, **dadurch gekennzeichnet, dass** der Rohrhalteteil (20) im Wesentlichen durch eine Schelle (21) gebildet ist, welche das Rohr (30) umschliessend aufnehmen kann.

7. Rohrhalterungsvorrichtung nach Anspruch 2 und 6, **dadurch gekennzeichnet, dass** die federnde Lasche (21.2) mit der Schelle (21) einstückig ausgebildet ist.

8. Rohrhalterungsvorrichtung nach Anspruch 6 oder 7, **dadurch gekennzeichnet, dass** die Schelle (21) quer zu einer Hauptachse des Rohrs (30) über das Rohr (30) schiebbar ist.

9. Rohrhalterungsvorrichtung nach einem der Ansprüche 1 bis 8, **dadurch gekennzeichnet, dass** ein von aussen sichtbarer Teil des Befestigungsteils (10) und/oder des Rohrhalteteils (20) aus, insbesondere oberflächenbehandeltem, Stahlblech gefertigt ist.

10. Rohrhalterungsvorrichtung nach einem der Ansprüche 1 bis 9, **dadurch gekennzeichnet, dass** der Rohrhalteteil (20) an einer Kontaktfläche mit dem Rohr eine Einlage (22) aus Gummi, insbesondere Lochgummi, aufweist.

11. Rohrhalterungsvorrichtung nach Anspruch 10, **dadurch gekennzeichnet, dass** die Einlage (22) an einem oberen und/oder unteren Ende durch eine im Wesentlichen ringförmige, an einen Aussendurchmesser des Rohrs (30) angepassten Abdeckung (23) abgeschlossen ist, wobei die Abdeckung (23) insbesondere geschlitzt ist, um eine Verformung des Rohrhalteteils (20) zu erlauben.

12. Rohrhalterungsvorrichtung nach einem der Ansprüche 1 bis 11, **dadurch gekennzeichnet, dass** der Befestigungsteil (10) mindestens eine seitliche Öffnung (12) zum Einführen eines Werkzeugs zum Lösen des Clip-Mechanismus (15, 21) aufweist.

13. Werkzeug zum Lösen des Clip-Mechanismus (15, 21) einer Rohrhalterungsvorrichtung nach Anspruch 12, **gekennzeichnet durch** einen Dorn, welcher zum Lösen des Clip-Mechanismus (15, 21) in die Öffnung (12) des Befestigungsteils einführbar ist.

14. Verfahren zum Befestigen eines Rohres (30) an einer Fläche (50), welches folgende Schritte umfasst:
a) Anbringen eines Befestigungsteils (10) an der Fläche (50);
b) Umschliessen des Rohrs durch einen Rohrhalteteil (20);
c) Verbinden des das Rohr (30) umschliessenden Rohrhalteteils (20) mit dem an der Fläche (50) angebrachten Befestigungsteil (10) durch einen Clip-Mechanismus (15,21).
